# EUROPÄISCHE PATENTSCHRIFT

(11) **EP 2 976 270 B1**
(45) Veröffentlichungstag und Bekanntmachung des Hinweises auf die Patenterteilung: **01.11.2017**
(21) Anmeldenummer: 14723964.4
(22) Anmeldetag: 21.03.2014
(51) Int. Cl.: B65D 19/32

(54) **TRANSPORTPALETTE UND VERFAHREN ZU IHRER HERSTELLUNG**
TRANSPORT PALLET AND METHOD FOR THE PRODUCTION THEREOF
PALETTE DE TRANSPORT ET PROCÉDÉ DE FABRICATION DE LADITE PALETTE

(30) Priorität: 22.03.2013 AT 2272013
(43) Veröffentlichungstag der Anmeldung: 27.01.2016
(73) Patentinhaber: Secar Technologie GmbH, 8682 Hönigsberg/Mürzzuschlag (AT)
(72) Erfinder: SEMLITSCH, Karl-Heinz, 8680 Mürzzschlag (AT)
(74) Vertreter: Wildhack, Andreas
(86) Internationale Anmeldenummer: PCT/AT2014/050071
(87) Internationale Veröffentlichungsnummer: WO 2014/146160

(56) Entgegenhaltungen:
- WO-A1-01/26982
- WO-A1-2012/023849
- DE-A1- 1 949 209
- DE-A1- 2 733 456
- DE-U- 6 609 559
- US-A- 2 486 284
- US-A- 3 573 144
- US-A- 5 139 845
- US-A1- 2005 199 158
- US-A1- 2009 095 206
- US-A1- 2012 312 951

## Beschreibung

Die vorliegende Erfindung betrifft eine neue Transportpalette, die sich insbesondere für den Flugverkehr eignet, wobei dieselbe im wesentlichen die Form einer quadratischen oder rechteckigen Platte aufweist, wobei sie im Vergleich zu den bisher für diesen Zweck gebräuchlichen Paletten auf Basis von Aluminium oder Aluminiumlegierungen wesentlich weniger Gewicht bzw. Masse aufweist, und ein Verfahren zu deren Herstellung.

Es sind schon die verschiedensten Vorschläge für derartige Transportpaletten bekannt geworden, wobei insbesondere deren - eine ja nicht nutzbare Tara darstellende - Gewicht möglichst reduziert werden soll, was insbesondere für den Luftverkehr von ganz wesentlicher Bedeutung ist. Eine Transportpalette, die alle Merkmale des Oberbegriffs des Anspruchs 1 aufweist, ist in DE 1 949 209 A1 offenbart. Im Zuge eingehender Versuche wurde eine mechanisch hochstabile und hochfeste Palette auf Basis von Kunststoffmaterial mit den Merkmalen des Anspruchs 1 entwickelt. Die Transportpalette ist **dadurch gekenntzeichnet,** dass sie als Armierungselemente zumindest zwei einander in einem Winkel im Bereich von 15 bis 90° kreuzende, im jeweiligen Kreuzungspunkt, vorzugsweise über dortige Relativlagestabilisierungs-Rinnen, -Einkerbungen, -Vertiefungen, -Einbuchtungen oder - Einschnürungen für die Bildung einer Steckverbindung aneinanderliegenden, mit einem mechanisch hochfesten, faserarmierten Komposit-Kunststoff gebildete Armierungs- bzw. Verstärkungsstäbe, dieselben in stabiler Lage und Anordnung zueinander haltenden, satt an sie gebundenen und sie einschließenden bzw. einbettenden bzw. allseitig umschließenden, mit der Mehrzahl von Teilkernen gebildeten plattenartigen Kern aus dem mit Armierung versehenen, mechanisch stabilen Schaumkunststoff aufweisen, welche Armierungs- bzw. Verstärkungsstäbe im wesentlichen bandartig, also mit sehr breitem bzw. flachem 1-Querschnitt mit seitlichen Längsvertiefungen bzw. Flanken-Rinnen ausgebildet sind, wobei die einander kreuzenden Armierungsstäbe im wesentlichen parallel oder im Winkel von 90° zu den Seitenrändern der Palettenplatte(n) oder aber in Richtung der Diagonalen derselben ausgerichtet sind und wobei die Teil-Kerne des mit denselben gebildeten, die Armierungs- bzw. Verstärkungsstäbe enthaltenden und dieselben ein- bzw. umschließenden Schaumkunststoff-Kerns an jenen ihrer Seitenflanken, wo sie an die Armierungs- bzw. Verstärkungsstäbe anliegen, an die Querschnittsgestalt derselben angepassten Querschnitt aufweisende Längserhebungen aufweisen, welche in die oben genannten entsprechenden seitlichen Längsvertiefungen bzw. Flanken-Rinnen der Armierungs- bzw. Verstärkungsstäbe formschlüssig, und bevorzugt auch, z.B. mittels Anschäumung oder Klebemittel, materialschlüssig, eingreifen, und dass alle Seitenränder der Paletten-Grundplatte entweder durch in das dortige Komposit-Kunststoffmaterial eingezogene, eingeschobene und/oder eingeklebte oder aber durch über dasselbe gezogene, geschobene, gestülpte und/oder angeklebte Profile aus Leichtmetall, Aluminium oder aus einer hochfesten Aluminiumlegierung verstärkt sind. Die neue Palette, die also zu hohem Anteil mit Kunststoffmaterial mit im wesentlichen einer Dichte in Nähe von 1 g/cm³ gebildet ist, zeichnet sich in Folge der in ihrem Inneren vorgesehen Armierungs-Verstrebungen, des gehärteten Schaumstoff-Kerns und der harten Komposit-Ober- und -Unterschicht bzw. -Ummantelung durch hohe mechanische Stabilität, hohe Tragfähigkeit, hohe Verschleißfestigkeit und einfache Handhabung und Herstellung aus.

Sie ist deshalb von hohem Interesse für jede Art von Transport, insbesondere jedoch für den Transport mittels Luftfahrzeugen, weil sie im Vergleich zu den bisher auf diesem Gebiet eingesetzten Transportpaletten auf Basis von Aluminium bei zumindest gleicher Biegefestigkeit und mechanischer Stabilität wie die bisher bekannten Paletten, ein um bis zu 40% geringeres Gewicht aufweist.

Was die im Inneren der neuen Palette vorhandenen Armierungsstäbe aus faserverstärktem Komposit-Kunststoff betrifft, so hat es sich für die Stabilität der neuen Palette als vorteilhaft erwiesen, wenn die einander kreuzenden Armierungs- bzw. Verstärkungsstäbe im wesentlichen parallel oder im Winkel von etwa 90° zu den Seitenrändern der Paletten-Platten oder aber etwa in Richtung der Diagonalen derselben ausgerichtet sind.

Besonders hohe mechanische Qualität der neuen Palette lässt sich erreichen, wenn die Teil-Kerne des mit denselben gebildeten, die Armierungsstäbe enthaltenden bzw. dieselben im wesentlichen ein- bzw. umschließenden Schaumkunststoff-Kerns an jenen ihrer Seitenflanken, wo sie an die Armierungsstäbe anliegen, an die Querschnittsgestalt derselben angepassten Querschnitt aufweisende Längserhebungen aufweisen die in entsprechende seitliche Längsvertiefungen bzw. Flanken-Rinnen der Armierungsstreben formschlüssig und bevorzugt auch, z.B. mittels Anschäumung oder Klebemittel, materialschlüssig eingreifen.

Was die Armierungsstäbe selbst betrifft, so ist es günstig, wenn dieselben, gegebenenfalls im wesentlichen (kreis-)runden, elliptischen, quadratischen oder Sechseck-, bestenfalls jedoch Flach- bzw. Breit-I-Querschnitt aufweisen. Besonders bevorzugt ist also eine neue Transportpalette, bei welcher die Armierungs- bzw. Verstärkungsstäbe im wesentlichen (flach-)bandartig ausgebildet, also sehr breiten bzw. flachen I-Querschnitt aufweisen, und bevorzugter Weise Vertiefungen, Einbuchtungen, Einkerbungen oder Einschnürungen im Bereich der Kreuzungspunkte aufweisen.

Es haben sich gegebenenfalls auch Armierungsstäbe aus faserverstärktem Komposit-Kunststoff als besonders vorteilhaft erwiesen, welche etwa torstahlartig ausgebildet sind.

Die Armierungsstäbe können als fertiges Profil (ausgehärtete Profile) ausgeführt sein bzw. ist es auch möglich, die Stäube als Preform (Profile werden erst durch das Pressverfahren ausgehärtet) in das Press-Werkzeug einzulegen.

Was das im Rahmen der Erfindung besonders bevorzugte Material der Armierungsstäbe betrifft, ist ein besonderer Vorteil dann gegeben, wenn die, bevorzugt bandartigen, Armierungs- bzw. Verstärkungsstäbe und die beiden, den armierten Schaumstoffkern ober- und unterseitig deckenden Außen-Schichten bzw. die bevorzugt den Schaumstoffkern vollständig umhüllende Ummantelungs-Schicht unterschiedlich oder gleich mit einem - mit Glas-, Carbon-, Aramid- und/oder Mineral-, insbesondere Basaltfasern verstärkten - Komposit-Kunststoffmaterial gebildet sind bzw. ist, wobei bevorzugter Weise die bzw. alle Ränder der Palettenplatte mit dem gleichen Komposit-Kunststoffmaterial überzogen sind, wenn also die armierte Schaumstoff-Kernplatte rundum mit einer einheitlichen Komposit-Kunststoffschicht überzogen ist.

Zum Schaumstoff-Kern, der ja bei möglichst geringer Masse dennoch wesentlich zur Festigkeit der neuen Transportpalette, insbesondere in Folge des Sandwich-Effektes, beiträgt, hat es sich als Vorteil erwiesen, wenn der die Armierungs- bzw. Verstärkungsstäbe mit mehreren seiner Teil-Kerne einschließende, Schaumkunststoff-Kern mit einem mechanisch hochstabilen geschäumten Kunststoff, insbesondere mit "Rohacell" oder auf Basis eines Polyurethans, gebildet ist.

Insbesondere im Hinblick auf die rauen Verladungsbedingungen, die auch auf Flughäfen herrschen, sei erwähnt, dass es sich als günstig erwiesen hat, wenn die Seitenränder der Palette bzw. Paletten-Platte oberseitig seitenrand-verdickt bzw. nach oben hin -erhöht ausgebildet sind und zwar,
- indem die Seitenrandverdickungen mit der Ummantelungs-Schicht aus dem faserarmierten Komposit-Kunststoffmaterial gebildet sind und zumindest eine, vorzugsweise nach oben hin offene Hinterschneidungsrinne aufweisen, in welche ein Profil aus einem Leichtmetall, insbesondere Aluminium oder Aluminiumlegierung, eingezogen bzw. eingeschoben, eingeklebt, eingebettet oder eingearbeitet ist, oder aber
- dass über bzw. auf die Seitenränder der mit dem faserarmierten Komposit-Kunststoff ummantelten Paletten-Platte jeweils ein die Seitenränder verdickendes bzw. verstärkendes Profil aus einem Leichtmetall, insbesondere Aluminium oder Aluminiumlegierung, geschoben bzw. gezogen ist, wobei die Unterseite dieses Profils mit der Paletten-Unterseite mit ihrer unterseitigen Kompositkunststoff-Schicht flächenbündig ausgebildet ist.

Bei diesen Ausführungsformen ist der Vorteil einer wesentlichen Stabilisierung des Transportgutes durch die erhöhten Ränder gegeben, wobei eine Hinterschneidungs-Rinnenprofilierung der Ränder der Palette von besonderen Vorteil ist, in welche z.B. die Halte-Gurte für das Transportgut eingezogen werden können.

Im Rahmen der Erfindung besonders bevorzugt ist eine Transport-Palette in einer Ausführungsform, bei welcher der mit den die Armierungsstreben umschließenden Teilkernen gebildete und gänzlich mit dem hochfestem faserverstärkten Kompositkunststoff ummantelte Schaumstoffkern, also die Palettenplatte im Abstand von allen seinen Rändern und parallel zu denselben durchgehend längst verlaufende, aufwärts gerichtete vorzugsweise abgerundeten, Trapezquerschnitt aufweisende, Formschluss-Erhebungen aufweist, welche mit eine entsprechende Trapez-Querschnittsgestalt aufweisenden, abwärts gerichteten Längseinbuchtungen der die Ränder des Paletten-Grundkörpers verstärkenden und stabilisierenden über die Paletten-Ränder gezogenen oder geschobenen, dieselben umstülpenden Profilen aus Leichtmetall, insbesondere aus Aluminium oder Aluminiumlegierung mit hochfesten Eigenschaften formschließend und bevorzugt auch materialschlüssig kooperieren.

Weiters hat es sich als günstig erwiesen, wenn die jeweils auf die Paletten-Grundplattenränder aufgezogenen oder aufgeschobenen, einstückigen Leichtmetall-, insbesondere Aluminiumprofile, die mit dem hochfesten Komposit-Kunststoff gebildete Palettenrand-Ummantelung jeweils mit ihrem unterseitigen Fortsatz und ihrem über ihre Randkante mit denselben verbundenen oberseitigen Fortsatz den Rand des Paletten-Grundkörpers anschließen, wobei die Unterfläche des unterseitigen Fortsatzes mit der ebenen Unterseite der Paletten-Grundplatte fluchtet während der oberseitige Fortsatz über die, bevorzugt ebene, Oberseite des Paletten-Grundkörpers hinausragt.

Im Sinne der Erleichterung der Befestigung des jeweiligen Transportgutes auf der neuen Palette ist eine Variante der Erfindung von Vorteil, gemäß welcher vorgesehen ist, dass das die Paletten-Grundplatte verstärkende Leichtmetall-Profil an seiner Oberseite eine Längs-Hinterschneidungsrinne aufweist, in welche von deren Oberseite, bevorzugt kreisrunde, Ausnehmungen eingearbeitet sind, deren Ausdehnung quer zum Verlauf der genannten Rinne, bevorzugt deren diesbezüglicher Durchmesser, größer ist als der Abstand der beiden rinnenbegleitenden oberen Hinterschneidungsfortsätze der Rinne voneinander.

Was die Beanspruchung der Eckbereiche von Transportpaletten betrifft, so ist diese besonders hoch.

Dementsprechend ist eine Ausbildungsform derselben bevorzugt, welche dadurch gekennzeichnet ist, dass für die Verstärkung der Eckenbereiche der Paletten-Grundplatte Eckenstabilisatorkörper, vorzugsweise auf Basis von faserverstärktem Kunststoff oder Aluminium, vorgesehen sind, welche an ihren - im rechten Winkel zueinander angeordneten - Profil-Anschlussflächen gleichartige, zwei-fortsätzige, die Palettenplatten zwischen den Fortsätzen einschließende Querschnittsform wie die an sich unmittelbar angeschlossenen Palettenrandverstärkungsprofile aus Leichtmetall, gegebenenfalls ohne eckgeführte Hinterschneidungsrinne, aufweisen, wobei vorzugsweise vorgesehen ist, dass der eigentliche Eckbereich der Eckenstabilisatorkörper abgerundet ausgebildet ist.

Gegenstand der Erfindung ist schließlich ein Verfahren zur Herstellung der oben beschriebenen Transport-Palette, welches dadurch gekennzeichnet ist, dass
- die einander kreuzenden Armierungsstreben aus dem faserarmierten Komposit-Kunststoff über ihre Steckverbindungen in die jeweils gewünschte gegenseitige Lage gebracht werden,
- dass in die Felder bzw. Zwickel zwischen ihnen denselben entsprechende Formen aufweisende Teil-Kerne aus einem festen Schaumkunststoff eingebracht werden, die an die Armierungsstreben deren Querschnittsform entsprechend anliegend positioniert und bevorzugterweise letztlich mit den Armierungsstreben verklebt od.dgl. werden und so insgesamt den armierten Schaumkunststoff-Kern bilden,
- auf welchen zur Anbindung ein Kunststoff-Prepreg aufgebracht wird,
- wonach dann zumindest beidseitig des Schaumkunststoff-Kerns jeweils ein Faserarmierungsvlies aufgebracht wird, welches nach Schieben der Aluminiumprofilen über die Seitenränder des Kerns zur Bildung der Palettenplatte mit einem Polymer getränkt wird und wobei der so vorbereitete Aufbau mit den Leichtmetallprofilen unter Ausbildung der fertigen Palette unter Einwirkung von Hitze und Druck verpresst wird.

Anhand der Zeichnung wird die Erfindung näher erläutert.

Es zeigen die Figuren 1 und 2 einfache Ausführungs- bzw. Anordnungsformen der zur Stabilisierung der neuen Paletten-Platte ganz wesentlich beitragenden Armierungsstäbe die Figuren 3, 4 sowie 5 und 6 zwei Stadien der Einschließung der Armierungsstreben in den mit mehreren Teilkernen gebildeten Schaumkunststoff-Kern, die Figuren 7 und 8 einen Querschnitt durch eine der Armierungsstäbe der neuen Transportpalette und eine Draufsicht auf dieselben an ihren Kreuzungspunkten, die Figuren 9 bis 12 die Armierungsstäbe jeweils in Querschnittsansicht und in Draufsicht, die Figuren 13 bis 15 einige mögliche Querschnitte durch einen der Seitenränder der neuen Paletten mit den diesen Seitenränder entlang verlaufenden, deren Verschleiß wesentlich herabsetzenden und den Rand der Palettenplatte stabilisierenden Leichtmetall-, insbesondere Aluminiumprofil, die Fig. 16. und 17 sowie 18 und 19 Beispiele für wesentliche Verbesserungen der mechanischen Festigkeit der erfindungsgemäßen Paletten erbringenden, auf die Längs-Ränder der Palettenplatte aufgebrachten, den Rändern über- bzw. umstülpenden Randschutz-Leichtmetallprofile, die Fig. 20 und 21 die neuen, die Eckbereiche der Palettenplatte über- bzw. umstülpenden Ecksegmente, die Fig. 22 und 23 Ansichten eines Schnittes durch die Palettenplatte in ihrem Eckbereich, und weiters, die Fig. 24 eine Schnittansicht der Palettenplatte, die Fig. 25 bis 27 den vollständigen Vorgang bei der Herstellung der fertigen neuen Leicht-Palette mit einfacher Diagonal-Armierung mit Rand- und Eckenschutz und die Fig. 28 bis 30 den analogen vollständigen Vorgang zur Herstellung einer Leicht-Palette mit mehrfach gekreuzter bzw. netzartiger Armierung der Palettenplatte.

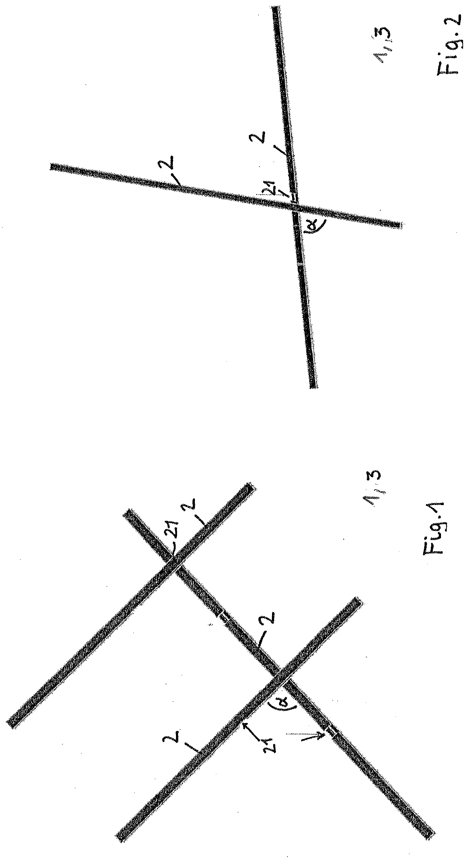

In den Figuren 1 und 2 ist schematisch gezeigt, wie beispielsweise nur drei oder zwei in 21 einander kreuzende Armierungsstäbe 2 aus faserverstärktem Komposit-Kunststoff innerhalb der Paletten-Grundplatte bzw. in deren Schaumkunststoff-Kern 3 angeordnet sind, wobei die Armierungsstäbe 2 in Fig. 2 einander in einem Winkel α von etwa 75° kreuzen und zum Rand der Palette hin auch etwa 75° geneigt angeordnet sind, während jene in Fig. 1 einander im rechten Winkel α kreuzen und im wesentlichen in Richtung der bzw. parallel zu den Diagonalen der etwa quadratischen Palettengrundplatte 1 ausgerichtet sind.

Die in den Fig. 1 und 2 gezeigten Armierungsstäbe 2 enden an sich "frei" im Schaumstoffkern 3.

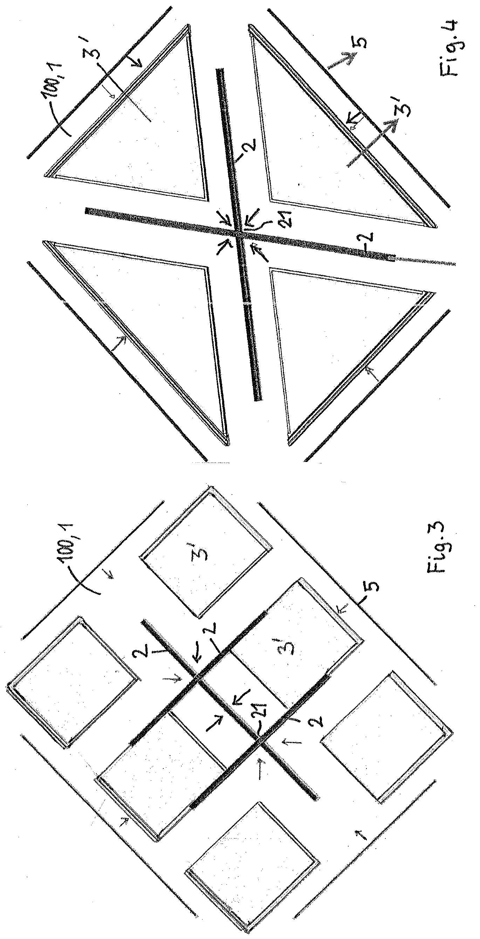

Die Figuren 3 und 4 zeigen - bei sonst gleich bleibenden Bezugszeichenbedeutungen - zwei Palettenplatten 1 der Palette 100 jeweils in einer ersten Stufe von deren Fertigung, wobei die zwischen die einander stabil kreuzenden Armierungsstrebe(n) 2 einzuschiebenden bzw. einzupassenden, jeweils der Form der Flächen der bzw. Zwickel zwischen den Armierungsstäben 2 angepasste Form aufweisenden und letztlich den gesamten Palettenkern 3 bildenden Teil-Kerne 3' vor ihrer endgültigen Positionierung dargestellt sind. Die Schaumstoff-Teilkerne 3' sind auf die jeweilige Zwickelgröße angepasst und werden im Zuge des Prozesses in das Werkzeug eingelegt. Angedeutet sind in den Fig. 3 und 4 weiters die letztlich den Rand des Kerns 3 bzw. Palette 100 bildenden Alu-Profile 5.

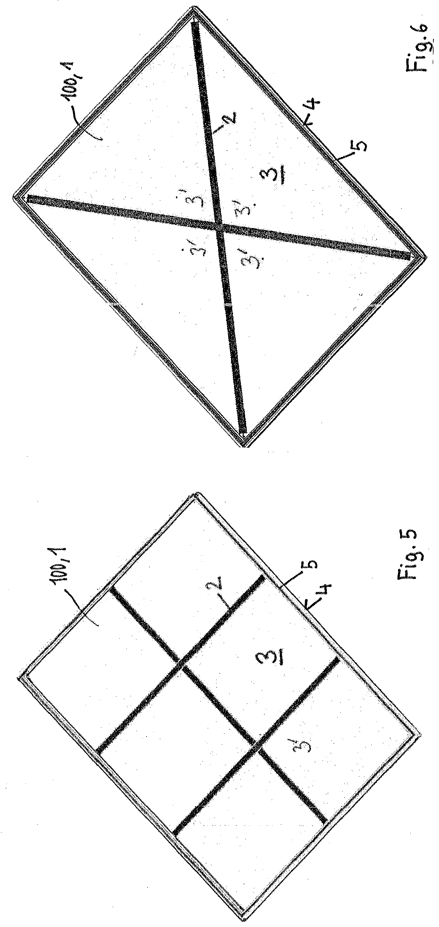

Aus den Figuren 5 und 6 geht - bei sonst gleich bleibenden Bezugszeichenbedeutungen - die nachfolgende, also letzte, Stufe der Fertigung hervor. Sie zeigen nun die einander kreuzenden Armierungsstäbe 2, wobei die Schaumstoff-Teilkerne 3' jetzt letztlich mit ihren Seitenflanken an die Querschnittsform der Armierungsstäbe 2 angepasst, an diesen Armierungsstäben 2 satt anliegen, und vorzugsweise mit ihnen verklebt sind und so insgesamt den streben-verstärkten Schaumkunststoff-Kern 3 der neuen Palettenplatte 1 bilden.

Es ist auch aus den Figuren 5 und 6 klar ersichtlich, wie an die Ränder 4 der künftigen Paletten-Platte 1 die seitenrand-verstärkenden Aluminiumprofile 5 herangeführt, z.B. dort aufgeschoben sind, die einander in den Eckbereichen der künftigen Palette 100 bzw. Palettenplatte 1 nicht berühren.

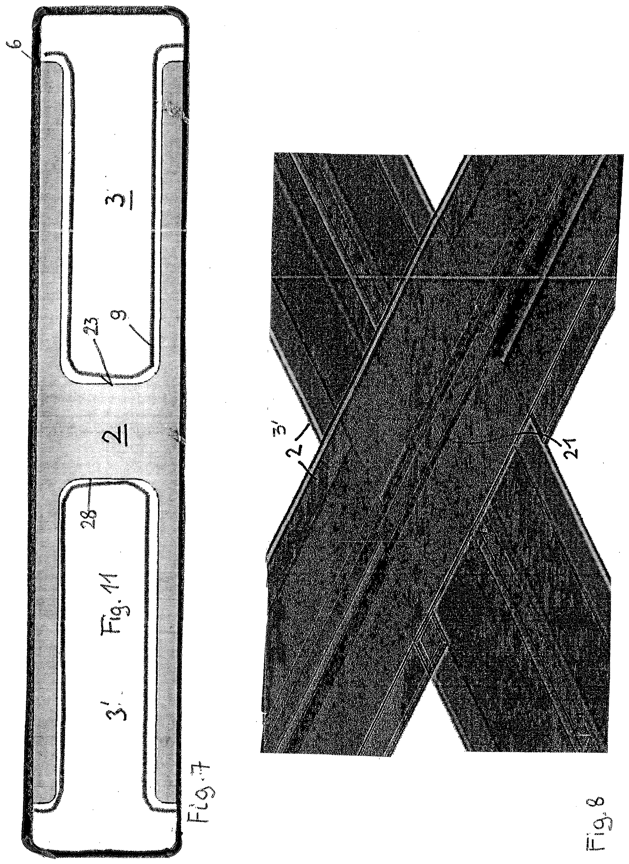

Die Figuren 7 und 8 zeigen - bei sonst gleich bleibenden Bezugszeichenbedeutungen - einen Querschnitt durch einen der Armierungsstäbe 2 mit bandartigem, extrem flach- bzw. breit-förmigen I-Querschnitt und in dessen beiden Seitenflankenrinnen 28 eingepassten Schaumkunststoff-Teilkern 3', wobei die beidseitigen Längsrinnen 28 der Flach-I-Band-Streben 2 mit einem Prepreg 9 für deren hochfeste Klebeverbindung mit den Schaumkunststoff-Teilkernen 3' ausgelegt sind, und eine Draufsicht auf die einander in 21 kreuzenden Armierungsstäbe 2 mit dem Flach-I-Querschnitt.

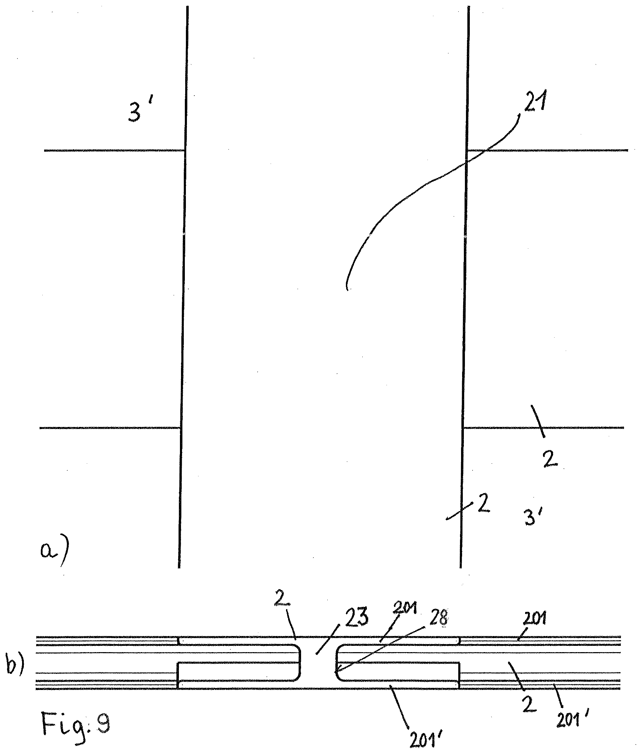

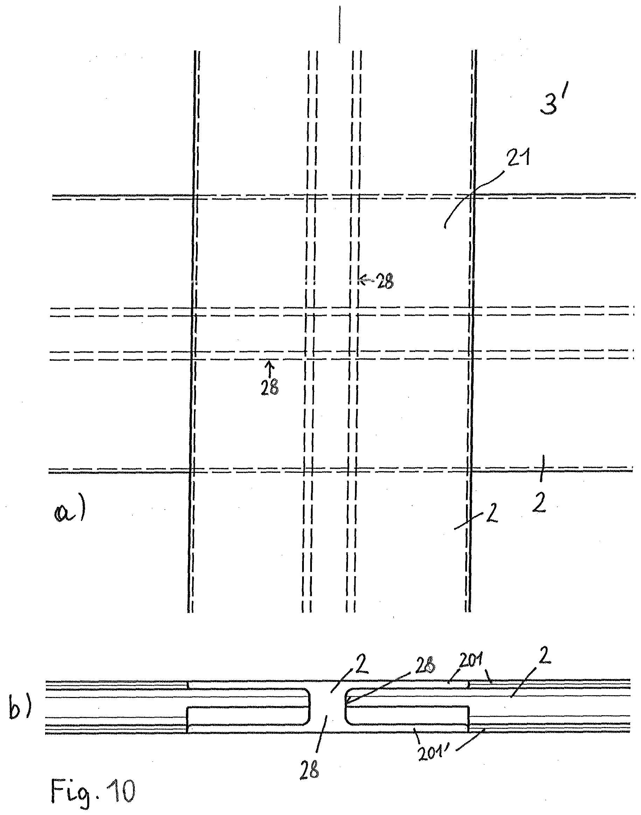

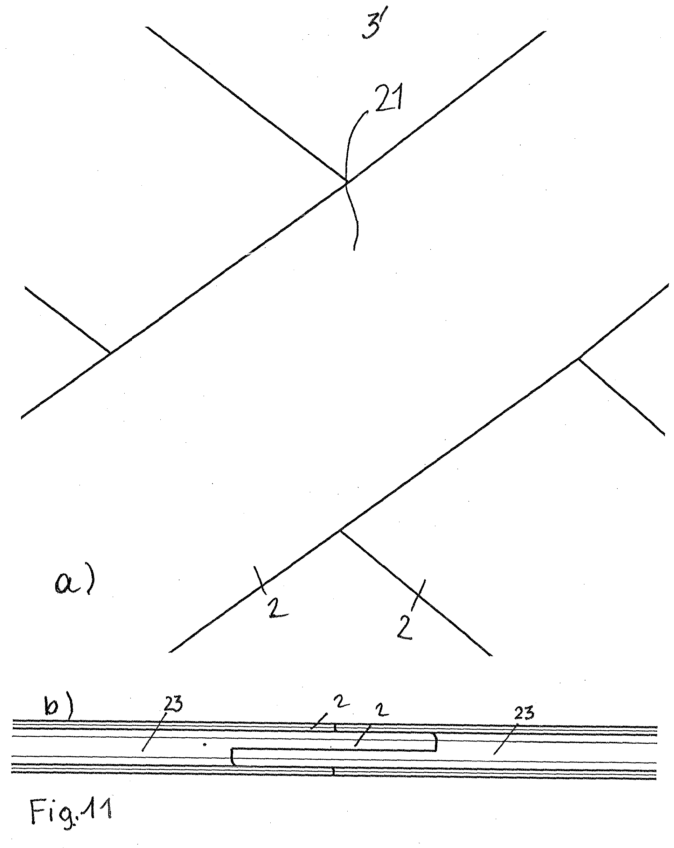

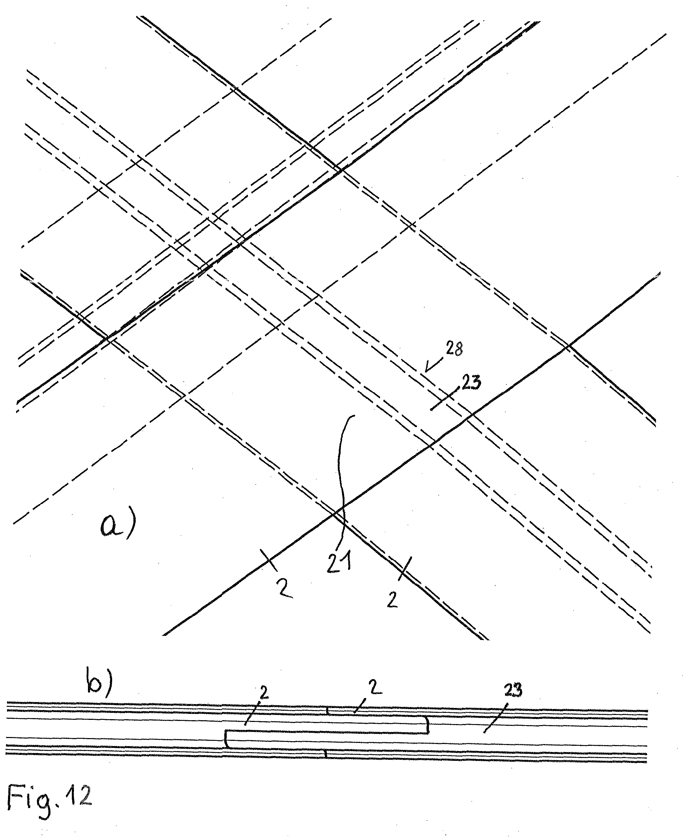

Weiters zeigen die Figuren 9 bis 12 - bei sonst gleich bleibenden Bezugszeichenbedeutungen - jeweils in Draufsicht und in Schnittansicht rechtwinkelige und die nicht-rechtwinkelige Kreuzungsbereiche 21 der Flach-I-Querschnitt aufweisenden Armierungsstäbe 2, wobei der Steg 23 des Breit-I-Querschnittes den oberen 201 und den unteren bandartigen, breit-flachen Bereich 201' des einzelnen Armierungsstabes 2 miteinander verbindet und zwischen den beiden bandartigen Bereichen auf beiden Seiten der Armierungsstäbe 2 jeweils eine tiefe Eintalung 28 gebildet ist, durch welche der formschlüssige und gegebenenfalls durch Klebung unterstützte, feste Halt zwischen Teilkern 3 und Armierungsstab 2 gewährleistet ist.

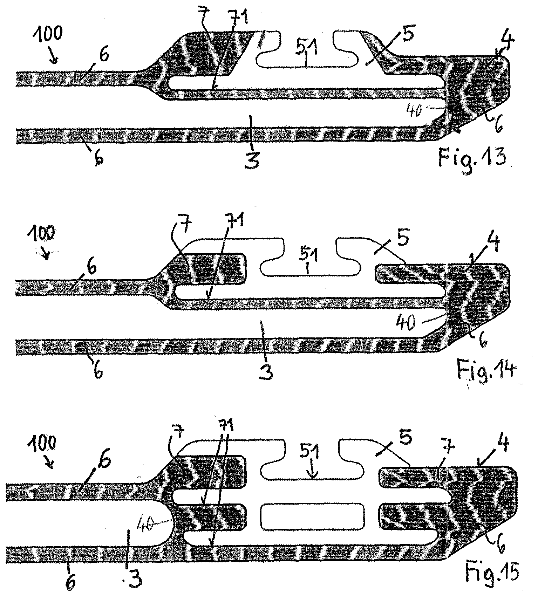

Weiters zeigen die Figuren 13 bis 15 - bei sonst gleich bleibenden Bezugszeichenbedeutungen - jeweils in Schnittansichten drei im Rahmen der Erfindung mögliche Anordnungen der ober- und der unterseitigen Armierungsplatte 6, der neuen Palette 100 sowie die hier mit ihr einheitliche bzw. einstückige, die seitlichen Ränder 40 des Plattenkerns 1 überziehende (Ränder-)Ummantelungsschicht 6 mit in den dortigen erhöhten Seitenrandwulst 7 angeordneten hinterschnittenen, mindestens einen Rinne 71, in welche ein randverstärkendes Leichtmetall-, insbesondere Aluminiumprofil 5, eingeschoben, insbesondere eingeklebt oder einpolymerisiert ist, das selbst ebenfalls eine Hinterschneidungsrinne 51 für den Einsatz von Ladungs-Haltegurten od. dgl. für das mit der neuen palettetransportierbare Transportgut aufweisen.

Im Zuge der praktischen Erfahrung und weiteren Entwicklungen wurde gefunden, dass eine mit den wulstartigen Verdickungen 4 des faserarmierten Kunststoffes der Palette 100 gebildete Verstärkung derselben, insbesondere im Fall von besonders schwerem und gegebenenfalls mehrteiligem Transportgut ausgestattete Palette, nicht immer den hohen Anforderungen des Transportgewerbes, insbesondere mit dem Flugzeug, vollständig zu genügen im Stande sind.

Es wurde gefunden, dass ganz bestimmt geformte über die Seitenränder der Palette 1 mit ihrem randumgreifenden Überzug 6,7 gestülpte und an die Platte 1, vorzugsweise gebundene, z.B. letztlich geklebte, Leichtmetall-Randprofile 5, den genanten hohen Anforderungen noch besser gerecht werden.

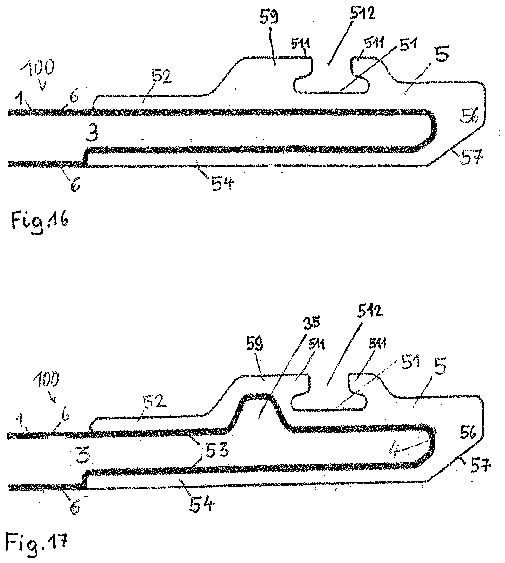

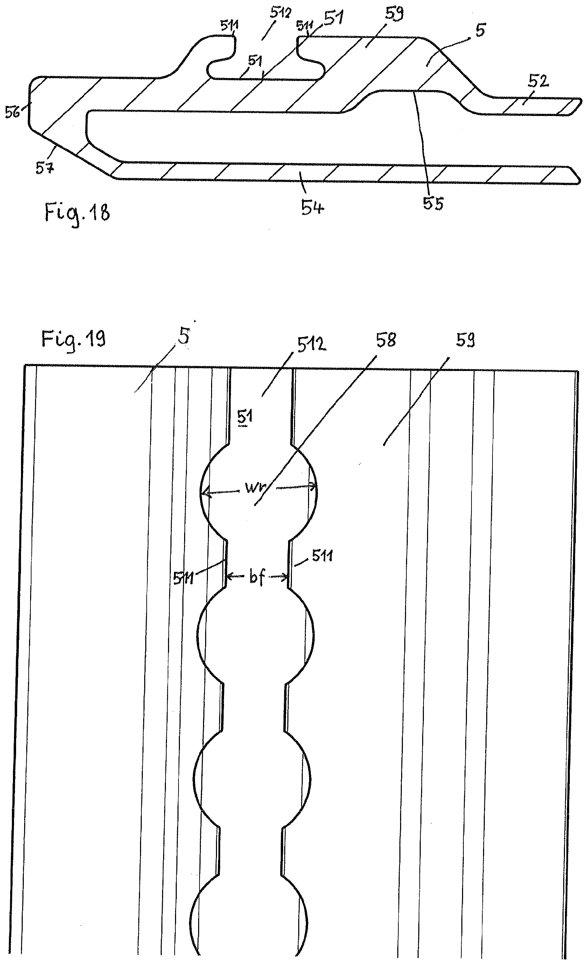

Es zeigen daher die Fig. 16 bis 19 - bei sonst gleichbleibenden Bezugszeichenbedeutungen - verschiedene Ausführungsformen der neuen Randprofile 5, wobei jenes gemäß Fig. 16 unter Umständen die Gefahr in sich birgt, dass dasselbe, z.B. im Falle einer seitlichen Verrutschung des Transportgutes, vom Rand der Palettenplatte 1 abgezogen werden könnte, während die Ausführungsvarianten der Fig. 17 und 18 infolge des Vorsehens einer randparallel verlaufenden Formschluss-Erhebung 35, welche in eine entsprechende längs dem Randprofil 5 verlaufende nach abwärts hin offene Vertiefung 55 desselben formschlüssig eingreift, diesen unter Umständen auftretenden Nachteil nicht mehr hat.

Die entlang der und parallel zu den Ränder(n) der Paletten-Grundplatte 1 verlaufende Formschluss-Erhöhung 35 ermöglicht eine echte Formschlussverbindung zum Aluminiumprofil 5 wodurch die Gesamtbelastungsfähigkeit der Palette 100 durch Formschluss und Klebeverbindung wesentlich erhöht wird. Weiters ist es möglich, das Aluprofil zunächst mit Nieten zu sichern.

Das Leichtmetall-Profil 5 wird mit der Palettengrundplatte 1 formschluss- und klebetechnisch verbunden. Durch den Formschluss wird die Positionierung sowie, höhere Gesamtbelastung der fertigen Palette wesentlich unterstützt.

Das in den Fig. 16 bis 18 - bei sonst gleichbleibenden Bezugszeichenbedeutungen - gezeigte Palettenrand-Verstärkungsprofil 5 ist einstückig und weist einen oberseitigen Fortsatz 52 auf, welcher über einen Randkörper 56 mit hier unterseitiger Abschrägung 57 in den unterseitigen Fortsatz 54 übergeht. Zwischen den beiden Fortsätzen 52 und 54 ist eine seitlich flach-schmale, zur Paletten-Grundplatte 3 hin offene etwa schluchtartige die Palettenplatte 1 rand-umgreifende Vertiefung 53 mit einer nach abwärts ragenden, etwa abgerundeten Trapez-Querschnitt aufweisenden Längs-Eintiefung 55 angeordnet.

In die schluchtartige Vertiefung 53 ragt mit ihrem Randbereich 4 die mit dem den armierten Kern 3 vollständig umhüllenden faserverstärkten Kunststoff gebildete hochfeste Kern-Ummantelung 6 wobei deren aufwärts gerichtete, Trapezquerschnitt aufweisende Erhebung 35 formschlüssig in die Eintiefung 55 des Randverstärkungs-Profiles 5 hineinragt.

Das Leichtmetall-Randprofil 5 weist oberseitig eine Erhebung 59 auf, in welche eine Hinterschneidungsrinne 51 mit oberseitigen, einander gegenüber angeordneten, zwischen einander einem Schlitz 512 herlassenden, hier gleich geformten Rinnenvorsprüngen 511 eingearbeitet ist.

Aus der Draufsicht gemäß Fig. 19 ist eine im Rahmen der Erfindung besonders bevorzugte Ausführungsform der Hinterschneidungs-Rinne 51 des Rand-Profiles 5 ersichtlich: Dort sind in Abständen voneinander in die beiden Rinnenvorsprünge 511 hier kreisrunde Öffnungen 58 eingearbeitet, welche ihrerseits eine Querweite wr aufweisen, die die Breite bf des Schlitzes 512 übersteigt.

Die Öffnungen 58 dienen insbesondere für das Einbringen der Gurthalterungselemente für die Verzurrungsgurte des jeweiligen auf der Palette 100 angeordneten Transportgutes in die Hinterschneidungs-Rinne 51.

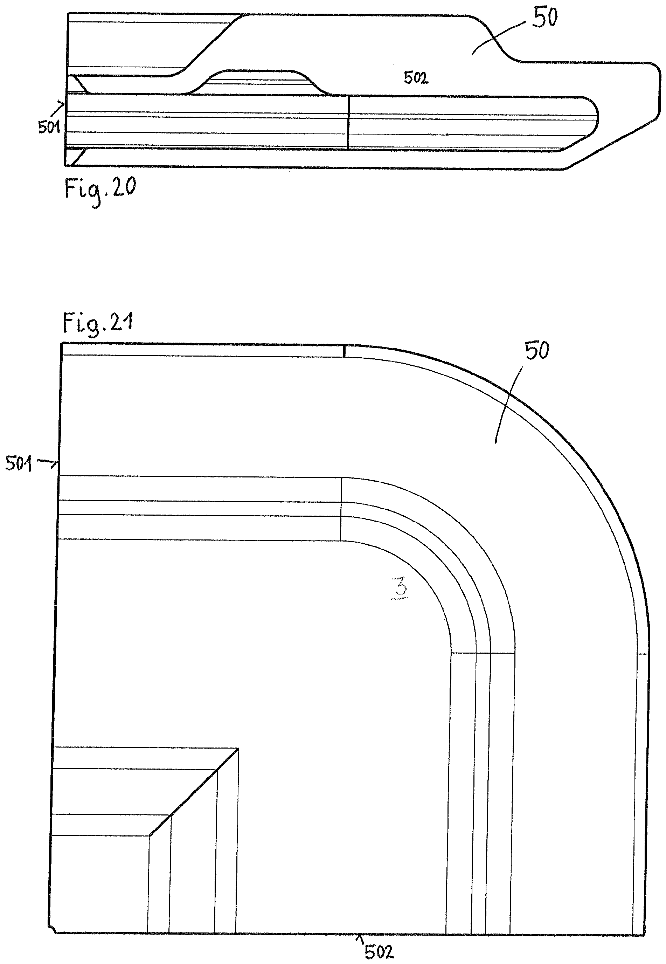

Die in den Figuren 20 und 21 - bei sonst gleichbleibenden Bezugszeichen - dargestellten Eck-Segmentkörper 50 weisen einen dem gezeigten Querschnitt der beiden rechtwinkelig zueinander angeordneten Anschlussflächen 501, 502 entsprechenden Innenaufbau auf, sie weisen in gleicher Weise angeordnete, gleichgeformte einzelne charakteristische Konstruktionsbereiche, also Rinne usw. auf, wie die vorher genau erörterten Leichtmetall-Randprofile 5, nur verlaufen alle diese Bereiche hier nicht gerade aus, sondern entsprechend gerundet rechtwinkelig um die Ecke.

Der von dem Ecksegment 50 umstülpte Eckbereich der Palettenplatte 1 ist in gleicher bzw. entsprechender Weise gerundet ausgeführt.

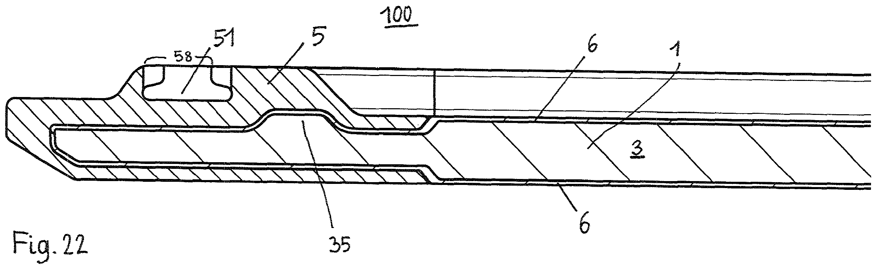

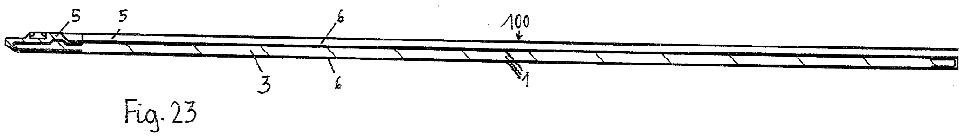

Die Fig. 22 und 23 zeigen - bei sonst gleichbleibenden Bezugszeichenbedeutungen - einen der Eckbereiche der neuen Leicht-Transportpalette 100 bzw. einen Randbereich der neuen Palette 100 im Schitt mit der mit der den mit Schaumkunststoff gebildeten Kern 3 rundum überziehenden, faserarmierten Kunststoffhülle 6 gebildeten Palettenplatte 1 und dem über deren abgerundeten Eckbereich oder ihren Rand gezogenen neuen Ecksegment 50, das bevorzugt aus dem gleichen Leichtmetall gefertigt ist, wie die Randverstärkungs-Profile 5.

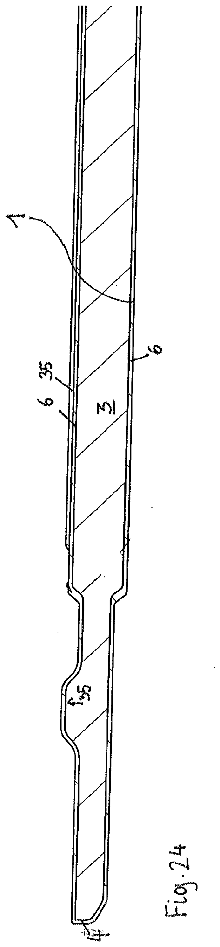

Die Fig. 24 zeigt - bei sonst gleichbleibenden Bezugszeichenbedeutungen - im Querschnitt die neue, tragstarke Paletten-Grundplatte 1 mit Schaumstoffkern 3 und allseitiger hochfester faserverstärkter Kunststoff-Umwandung 6, wobei dieselbe mit faserarmierten Komposit-Kunststoff mit duroplastischer Matrix, gegebenenfalls aber auch mit Silikonharz, Epoxy- oder Vinylesterharz und weiters auch mit Polyethylen, Polyamid, Polypropylen gebildet sein kann, welche zur Verstärkung der Oberfläche Metallgitter oder Körper bzw. Fasern aus einem harten Mineral, wie z.B. Quarz, enthalten kann.

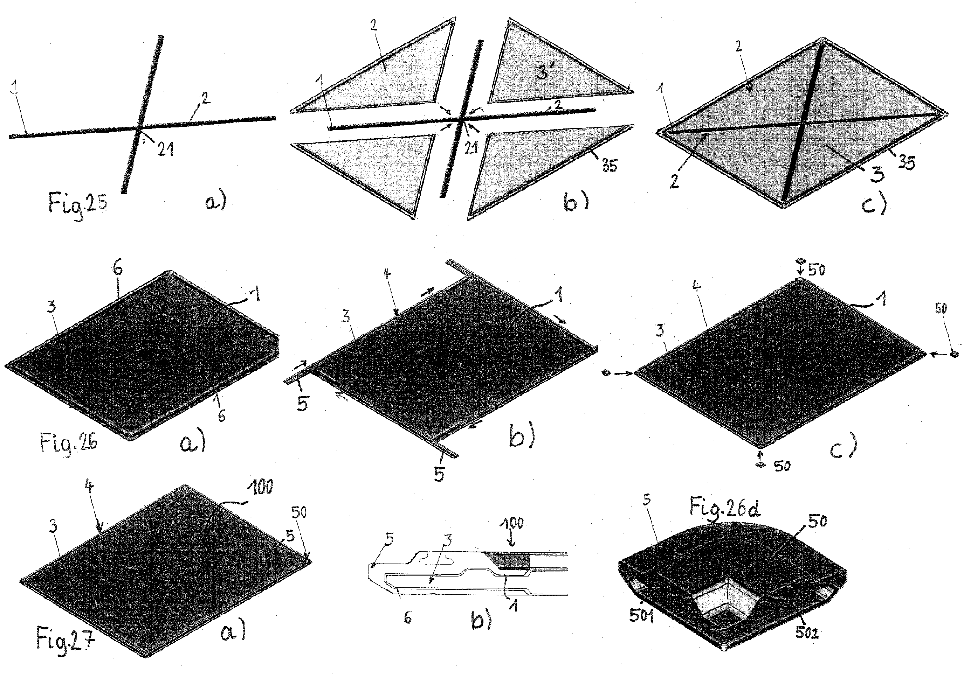

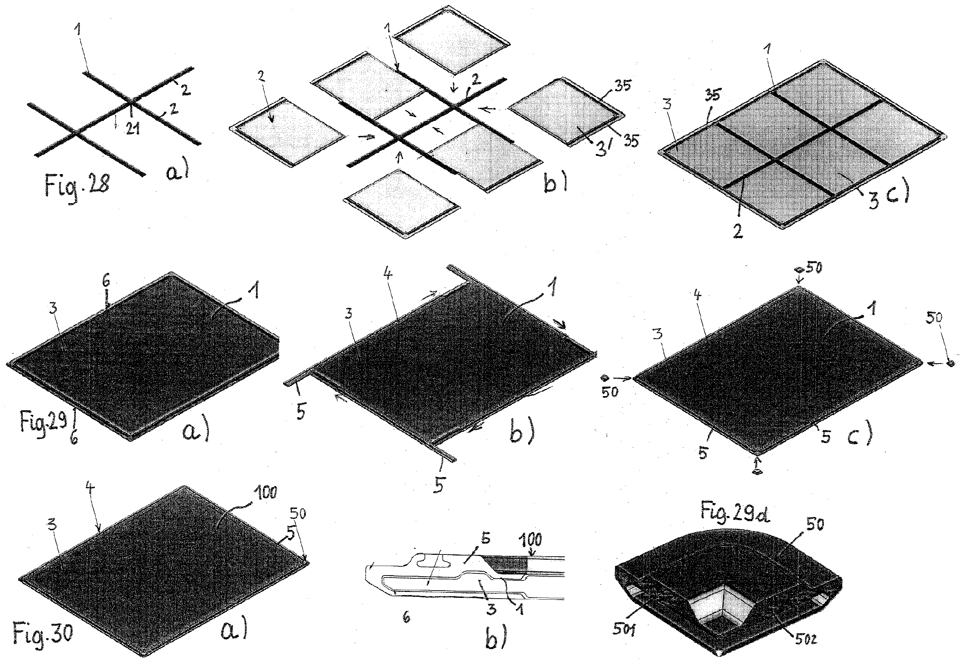

Die Fig. 25 bis 30 zeigen - bei sonst gleichbleibenden Bezugszeichenbedeutungen - analog zu den Fig. 3 bis 6 den vollständigen Ablauf der Produktion der neuen leichten Transportpalette 100, wobei nach erfolgter, schon oben genau beschriebenen Fertigung der mit den Armierungsstreben 2 ausgestattete, mit den Teilkernen 3' gebildete Schaumstoffkern 3, siehe Fig. 25c und 28c, erhalten wird.

Über diesen rundum randparallele Erhebungen 35 aufweisenden Schaumstoffkern 3 wird allseitig eine Prepreg-Schicht eines härtbaren faserarmierten Kunststoffes aufgebracht und dieses so gebildete Ensemble wird unter Erwärmung zu der die jeweils einzusetzende Form aufweisenden Paletten-Grundplatte 1 mit den armierten Schaumstoffkern 3 ummantelnder zumindest faserverstärkter Kunststoffhülle verpresst, siehe Fig. 26a und 29a.

Über alle Ränder der Paletten-Platte 1 werden die - wie oben genauer erläutert, im Querschnitt speziell geformten Leichtmetallprofile 5 aufgezogen, siehe Fig. 26b, 29b, welche in ihrer Endpositionierung jeweils schon vor den Eckbereichen der Paletten-Platte 1 enden, also einander dort nicht berühren.

Auf die jeweils keine Leichtmetall-Randprofile 5 aufweisenden Eckbereiche der Palettenplatte 1 werden, siehe die Fig. 26c, 29c, die Ecksegmente 50, siehe Fig. 26d, 29d aufgesteckt, deren Anschlussflächen 501, 502 jeweils direkt an die Enden der Randverstärkungs-Leichtmetallprofile 5 anschließen.

Die so erstellte gesamte auf die beschriebene Weise erhaltene neue Leicht-Palette 100 mit der Darstellung der Ausführungsform von deren Eckzonen gemäß Fig. 27b, 30b zeigen die Fig. 27a und 30a.

## Patentansprüche

1. Transportpalette (100), insbesondere für den Flugverkehr, die im wesentlichen die Form einer quadratischen oder rechteckigen Platte aufweist, welche - für eine wesentliche Reduktion ihres Gewichts - zu wesentlichen Anteilen mit Kunststoffmaterial gebildet, einen mit einer Mehrzahl von über Armierungselemente miteinander verbundenen TeilKernen (3') gebildeten plattenartigen Kern (3) aus einem mit Armierung versehenen, mechanisch stabilen Schaumkunststoff zur Bildung einer Paletten-Grundplatte (1) aufweist, über dessen obere und untere Hauptfläche zumindest jeweils eine mechanisch hochfeste Schicht aus einem faserarmierten Komposit-Kunststoff gebunden ist oder aber welcher mehrteilige Schaumstoffkern insgesamt, also über seine Außenränder von einer derartigen faserarmierten Komposit-Kunststoff-Außenschicht ummantelt ist und wobei die Seitenränder der Paletten-Grundplatte durch Metallprofile (5) verstärkt sind, **dadurch gekennzeichnet,**
**dass** sie als Armierungselemente zumindest zwei einander im Winkel (α) im Bereich von 15 bis 90° kreuzende, im jeweiligen Kreuzungspunkt (21), vorzugsweise über dortige Relativlagestabilisierungs-Rinnen, -Einkerbungen, -Vertiefungen, -Einbuchtungen oder -Einschnürungen (21') für die Bildung einer Steckverbindung aneinanderliegenden, mit einem mechanisch hochfesten, faserarmierten Komposit-Kunststoff gebildete Armierungs-bzw. Verstärkungsstäbe (2), dieselben in stabiler Lage und Anordnung zueinander haltenden, satt an sie gebundenen und sie einschließenden bzw. einbettenden bzw. allseitig umschließenden, mit der Mehrzahl von Teilkernen (3') gebildeten plattenartigen Kern (3) aus dem mit Armierung versehenen, mechanisch stabilen Schaumkunststoff aufweisen, welche Armierungs- bzw. Verstärkungsstäbe (2) im wesentlichen bandartig, also mit sehr breitem bzw. flachem I-Querschnitt mit seitlichen Längsvertiefungen bzw. Flanken-Rinnen (23) ausgebildet sind,
wobei die einander kreuzenden Armierungsstäbe (2) im wesentlichen parallel oder im Winkel von 90° zu den Seitenrändern (4) der Palettenplatte(n) (1) oder aber in Richtung der Diagonalen derselben ausgerichtet sind und
wobei die Teil-Kerne (3') des mit denselben gebildeten, die Armierungs- bzw. Verstärkungsstäbe (2) enthaltenden und dieselben ein- bzw. umschließenden Schaumkunststoff-Kerns (3) an jenen ihrer Seitenflanken (22), wo sie an die Armierungs- bzw. Verstärkungsstäbe (2) anliegen, an die Querschnittsgestalt derselben angepassten Querschnitt aufweisende Längserhebungen aufweisen, welche in die oben genannten entsprechenden seitlichen Längsvertiefungen bzw. Flanken-Rinnen (23) der Armierungs- bzw. Verstärkungsstäbe formschlüssig, und bevorzugt auch, z.B. mittels Anschäumung oder Klebemittel, malerlalschlüssig, eingreifen, und
**dass** alle Seitenränder (4) der Paletten-Grundplatte (1) entweder durch in das dortige Komposit-Kunststoffmaterial eingezogene, eingeschobene und/oder eingeklebte oder aber durch über dasselbe gezogene, geschobene, gestülpte und/oder angeklebte Profile (5) aus Leichtmetall, Aluminium oder aus einer hochfesten Aluminiumlegierung verstärkt sind.

2. Transportpalette nach Anspruch 1, **dadurch gekennzeichnet, dass** die bandartigen Armierungs- bzw. Verstärkungsstäbe (2) und die beiden, den armierten Schaumstoffkern (3) ober- und unterseitig deckenden Außen-Schichten bzw. die bevorzugt den Schaumstoffkern (3) vollständig umhüllende Ummantelungs-Schicht (6) unterschiedlich oder gleich mit einem - mit Glas-, Carbon-, Aramid- und/oder Mineral-, insbesondere Basaltlasern verstärkten - Komposit-Kunststoffmaterial gebildet sind bzw. ist, wobei alle Ränder der Palettenplatte mit dem gleichen Komposit-Kunststoffmaterial überzogen sind, wenn die armierte Schaumstoff-Kernplatte rundum mit einer einheitlichen Komposit-Kunststonschicht überzogen ist.

3. Transportpalette nach Anspruch 1 oder 2, **dadurch gekennzeichnet,**
**dass** der die Armierungs- bzw. Verstärkungsstäbe (2) mit mehreren seiner Teil-Kerne (3') einschließende Schaumkunststoff-Kern (3) mit einem mechanisch stabilen geschäumten Kunststoff, insbesondere mit "Rohacell" oder auf Basis eines Polyurethans, gebildet ist.

4. Transportpalette nach einem der Ansprüche 1 bis 3, **dadurch gekennzeichnet, dass** Seitenränder (40) der Palette bzw. Paletten-Platte oberseitig seitenrand-verdickt bzw. nach oben hin -erhöht ausgebildet sind und zwar,
- indem die Seitenrandverdickungen mit der Ummantelungs-Schicht (6) aus dem faserarmierten Komposit-Kunststoffmaterial gebildet sind und zumindest eine, vorzugsweise nach oben hin offene, Hinterschneidungsrinne (71) aufweisen, in welche ein Profil (5) aus einem Leichtmetall, insbesondere Aluminium oder Aluminiumlegierung, eingezogen bzw. eingeschoben ist, oder aber
- dass über bzw. auf die Seitenränder (40) der mit dem faserarmierten Komposit-Kunststoff ummantelten Paletten-Platte (1) jeweils ein die Seitenränder (40) verdickendes bzw. verstärkendes Profil (5) aus einem Leichtmetall, insbesondere Aluminium oder Aluminiumlegierung, geschoben bzw. gezogen ist, wobei die Unterseite (502) dieses Profils (5) mit der Paletten-Unterseite mit ihrer unterseitigen Kompositkunststoff-Schicht (6) flächenbündig ausgebildet ist.

5. Transportpalette nach einem der Ansprüche 1 bis 4, **dadurch gekennzeichet**, dass der mit den die Armierungs- bzw. Verstärkungsstäbe (2) umschließenden Teilkernen (3') gebildete und gänzlich mit dem hochfesten faserverstärkten Kompositkunststoff ummantelte Schaumstoffkern (3), also die Palettenplatte (1), im Abstand (a) von allen Rändern (4) und parallel zu denselben durchgehend längst verlaufende, aufwärts gerichtete, vorzugsweise abgerundete, Trapezquerschnitt aufweisende, Formschluss-Erhebungen (35) aufweist, welche miteine entsprechende Trapez-Querschnittsgestalt aufweisenden, abwärts gerichteten - Längseinbuchtungen (55) der die Ränder (4) des Paletten-Grundkörpers (1) verstärkenden und stabilisierenden, über die Paletten-Rander (4) gezogenen oder geschobenen, dieselben umstülpenden Profilen (5) aus Leichtmetall, insbesondere aus Aluminium oder Aluminiumlegierung mit hochfesten Eigenschaften formschließend, und bevorzugt auch materialschlüssig, kooperieren.

6. Transportpalette nach einem der Ansprüche 1 bis 5, **dadurch gekennzeichnet, dass** die jeweils auf die Paletten-Grundplatten-Ränder (4) aufgezogenen oder aufgeschobenen, einstückigen Leichtmetall-, insbesondere Aluminiumprofile (5), die mit dem hochfesten Komposit-Kunststoff gebildete Palettenrand-Ummantelung (6) jeweils mit ihrem unterseitigen Fortsatz (54) und ihrem über ihre Randkante (37) mit denselben verbundenen oberseitigen Fortsatz (52) an den Rand (4) des Paletten-Grundkörpers (1) anschließen, wobei die Unterfläche (502) des unterseitigen Fortsatzes (54) mit der ebenen Unterseite der Paletten-Grundplatte (1) fluchtet, während der oberseitige Fortsatz (52) über die, bevorzugt ebene, Oberseite des Paletten-Grundkörpers (1) hinausragt.

7. Transportpalette nach einem der Ansprüche 1 bis 6, **dadurch gekennzeichnet, dass** das die Paleiten-Grundplatte (1) verstärkende Leichtmetall-Profil (5) an seiner Oberseite (os) eine Längs-Hinterschneidungsrinne (51) aufweist, in welche von deren Oberseite (51), bevorzugt kreisrunde, Ausnehmungen (58) eingearbeitet sind, deren Ausdehnung (wd) quer zum Verlauf der genannten Rinne (511), bevorzugt deren diesbezüglicher Durchmesser (da), größer ist als der Abstand (bf) der beiden rinnenbegleitenden oberen Hinterschneidungsfortsätze der Rinne (511) voneinander.

8. Transportpalette nach einem der Ansprüche 1 bis 7, **dadurch gekennzeichnet, dass** für die Verstärkung der Eckenbereiche der Paletten-Grundplatte (1) Eckenstabilisatorkörper (50) auf Basis von faserverstärktem Kunststoff oder Aluminium vorgesehen sind, welche an ihren - im rechten Winkel zueinander angeordneten - Profil-Anschlussflächen (501, 502) gleichartige, zwei-fortsätzige, die Palettenplatten zwischen den Fortsätzen einschließende Querschnittsform wie die an sich unmittelbar angeschlossenen Palettenrandverstärkungs-Profile (5) aus Leichtmetall, gegebenenfalls ohne eckgeführte Hinterschneidungsrinne (5), aufweisen, wobei vorzugsweise vorgesehen ist, dass der eigentliche Eckbereich der Eckenstabilisatarkörper (50) abgerundet ausgebildet ist.

9. Verfahren zur Herstellung einer Transport-Palette (100) nach einem der Ansprüche 1 bis 8, **dadurch gekennzeichnet, dass**
- die einander kreuzenden Armierungs- bzw. Verstärkungsstäbe (2) aus dem faserarmierten Komposit-Kunststoff über ihre Steckverbindungen in die jeweils gewünschte gegenseitige Lage gebracht werden,
- dass in die Felder bzw. Zwickel zwischen ihnen, denselben entsprechende Formen aufweisende Teil-Kerne (3') aus einem festen Schaumkunststoff eingebracht werden, die an die Armierungs- bzw. Verstärkungsstäbe deren Querschnittsform entsprechend anliegend positioniert und bevorzugterweise letztlich mit den Armierungs- bzw. Verstärkungsstäben (2) verklebt od. dgl. werden und insgesamt den armierten Schaumkunststoff-Kern (3) bilden,
- auf welchen Schaumkunststoff-Kern zur Anbindung ein Kunststoff-Prepreg aufgebracht wird,
- wonach dann zumindest beidseitig des Schaumkunststoff-Kerns jeweils ein Faserarmierungsvlies aufgebracht wird, welches nach Schieben der Leichtmetallprofile (5) über die Seitenränder des Schaumkunststoff-Kerns zur Bildung der Palettenplatle (1) mit einem Polymer getränkt wird und wobei der so vorbereitete Aufbau mit den Leichtmetallprofilen unter Ausbildung der fertigen Palette unter Einwirkung von Hitze und Druck verpresst wird.

## Claims

1. Transport pallet (100), in particular for air traffic, which essentially comprises a plate of square or rectangular shape, which is essentially made of plastic material in order to achieve a substantial reduction in weight, a plate-like core (3) essentially formed by a plurality of sub-cores (3') which are connected to each other via reinforcing elements made of reinforced mechanically-stable plastic to form a pallet base plate (1) whose upper and lower main surfaces are bound by at least one mechanically high-strength layer of a fiber-reinforced composite plastic, or else which multi-part foam core is entirely sheathed, i.e. over its outer edges, by such a fiber-reinforced composite plastic outer layer, and wherein the side edges of the pallet base plate are reinforced by metal profiles (5),
**characterized in that**
the reinforcing elements are formed by at least two reinforcing or strengthening bars (2) which intersect each other at an angle (α) in the range between 15° to 90° at two intersection points (21) and are arranged at the respective intersection points (21), preferably via relative position stabilizing grooves, indentations, recesses, concavities or constrictions (21') to form a plug-in connection with a reinforcing or strengthening bar (2) made of a mechanically high-strength fiber-reinforced composite plastic, which hold the latter together in a stable position and arrangement and tightly bind them to each other, and embed or enclose or surround them on all sides by the plurality of plate-like cores (3) formed of sub-cores (3') made of the reinforced mechanically stable foam plastic, wherein the reinforcing or strengthening bars (2) are formed substantially band-like, i.e. with a very wide or flat "I" cross-section with lateral oblong recesses or side grooves (23), wherein the mutually-intersecting reinforcing or strengthening bars (2) are oriented essentially parallel or at an angle of 90° to the side edges (4) of the pallet plate(s) (1) or else in the direction of the diagonals thereof, and wherein the sub-cores (3') of the foam plastic core (3), which are formed with the same foam plastic cores (3) containing the reinforcing or strengthening bars (2) and enclosing or sheathing the latter on each of their side edges (22) where they lie against the reinforcing or strengthening bars (2) and comprise the longitudinal elevations having the same cross-section adapted to the cross-sectional design, which in the above-mentioned corresponding lateral oblong recesses or edge grooves (23), engage the reinforcing or strengthening bars (2) in a form-fitting and preferably also material-bonding means e.g. through foaming or bonding means, and wherein all the side edges (4) of the pallet base plate (1) are reinforced by either being pulled, pushed, or bonded into the composite plastic material, or else, reinforced by profiles (5) made of light metal, aluminum or a high-strength aluminum alloy, being pulled, pushed, and/or bonded over the same.

2. Transport pallet according to claim 1,
**characterized in that**
the band-like reinforcing or strengthening bars (2) and the two outer layers respectively covering the reinforced foam core (3) on the upper and lower sides, or the sheathing layer (6) which completely surrounds the foam core (3) is/are formed differently or identically with a composite plastic material reinforced with glass, carbon, aramid and/or mineral, in particular basalt fibers, wherein all the edges of the pallet plate are coated with the same composite plastic material when the reinforced foam core plate is coated all around with a uniform composite plastic layer.

3. Transport pallet according to claim 1 or 2,
**characterized in that**
the reinforcing or strengthening bar (2) with its foam plastic core (3) enclosing the sub-core (3'), is formed with a mechanically stable foamed plastic, in particular with "Rohacell" or on the basis of a polyurethane.

4. Transport pallet according to one of the claims 1 to 3,
**characterized in that**
the side edges (40) of the pallet or pallet plate are thickened on the upperside or are raised upwards, namely wherein
- the side edge thickenings with the sheathing layer (6) are formed from the fiber-reinforced composite plastic material, and comprise at least one undercut groove (71) preferably raised upwards and into which a profile (5) of a light metal, in particular aluminum or aluminum alloy, is pulled or pushed in, or else
- a profile (5) of a light metal, in particular an aluminum or an aluminum alloy used to thicken or reinforce the side edges (40) of the pallet plate (1) sheathed with the fiber-reinforced composite plastic, is pushed or pulled on, wherein the underside (502) of this profile (5) is formed flush with the underside of the pallets with its underside composite plastic layer (6).

5. Transport pallet according to one of the claims 1 to 4,
**characterized in that**
the foam core (3) sheathed entirely with the high-strength fiber-reinforced composite plastic with the sub-cores (3') enclosing the reinforcing or strengthening bar (2), i.e. the pallet plate (1), at a distance (a) from all the edges (4) and parallel to them, comprises form-fitting elevations (35) of preferably rounded trapezoidal cross-section extending continually longitudinally upwards, to reinforce and stabilize the edges (4) of the pallet base body (1) have an oblong indentation (55) comprising a corresponding trapezoidal cross-sectional form directed upwards via the same profiles (5) made of light metal, in particular of aluminum or aluminum alloy with high-strength properties, which are pulled or pushed over the pallet edges (4) in a form-fitting and preferably also material-bonding manner.

6. Transport pallet according to one of the claims 1 to 5,
**characterized in that**
the one-piece light metal elements, in particular aluminum profiles (5), which are respectively puller or pushed on the pallet base plate edges (4) and which, with the pallet edge sheathing (6) made of high-strength composite plastic, respectively with its underside extension (54), is connected with the same bonded upperside extension (52) at the edge (4) of the pallet base body (1) via its edge border (37), wherein the undersurface (502) of the underside extension (54) is flush with the flat underside of the pallet base plate (1), while the upperside extension (52) protrudes above the preferably flat upperside of the pallet base body (1).

7. Transport pallet according to one of the claims1 to 6,
**characterized in that**
the light metal profile (5) reinforcing the pallet base plate (1) comprises on its upperside (os) a longitudinal undercut groove (51) into which preferably circular recesses (58) are incorporated into its upperside (51), the extension (wd) of which is transverse to the course of the said groove (511) and preferably has a diameter (da) which is larger than the distance (bf) between the two groove-related upper undercut extensions of the groove (511).

8. Transport pallet according to one of the claims 1 to 7,
**characterized in that**
the reinforcement of the corner regions of the pallet base plate (1) is effected with corner stabilization bodies (50) based on fiber-reinforced plastic or aluminum, which on their profile connection surfaces (501, 502) - lying at right angles to one another - comprise two identical extensions directly connected to one another, wherein the pallet plates between the extensions have the same cross-sectional form as the directly connected pallet edge reinforcing profile (5) made of light metal, optionally without an angular undercut groove (5), wherein it is preferably provided that the actual corner region of the corner stabilization body (50) is rounded.

9. Method of manufacturing a transport pallet (100) according to one of the claims 1 to 8,
**characterized in that**
- the mutually intersecting reinforcing or strengthening bars (2) made of the fiber-reinforced composite plastic are brought into the respectively desired mutual position via their plug-in connections,
- the sub-cores (3') made of a rigid foam plastic and with the same corresponding shape, are introduced into the area or gusset between them, and the reinforcing or strengthening bars (2) the cross-sectional form of which is correspondingly positioned adjacent and preferably finally bonded or the like to them, in order to form the entire reinforced foam plastic core (3)
- on which foam plastic core a plastic prepreg is applied for the connection,
- wherein a fiber reinforcing non-woven is then respectively applied on both sides of the foam plastic core, which, after sliding the light metal profile (5) over the side edges of the foam plastic core to form the pallet plate (1) with a polymer, and wherein the thus prepared structure is pressed with the light metal profile to form the finished plate under the effect of heat and pressure.

## Revendications

1. Palette de transport (100), plus particulièrement pour le transport aérien, qui présente globalement la forme d'une plaque carrée ou rectangulaire, qui, pour une réduction considérable de son poids, est constituée en majeure partie d'une matière plastique, qui comprend un noyau (3) en forme de plaque constitué d'une pluralité de noyaux partiels (3') reliés entre eux par l'intermédiaire d'éléments d'armature, constitué d'une matière plastique alvéolaire robuste munie d'une armature pour la formation d'une plaque de base de palette (1), au-dessus de la surface principale supérieure et inférieure de laquelle est appliquée au moins une couche à haute résistance mécanique constituée d'une matière plastique composite renforcée avec des fibres ou ce noyau en mousse en plusieurs parties est entouré dans l'ensemble, donc sur ses bords extérieurs par une couche externe en matière plastique composite renforcée par des fibres et les bords extérieurs de la plaque de base de palette sont renforcés par des profilés métalliques (5),
**caractérisée en ce que**
elle comprend, en tant qu'éléments d'armature au moins deux barres d'armature ou de renforcement (2) constituée d'une matière plastique composite renforcée par des fibres, à haute résistance mécanique, se croisant entre elles avec un angle (α) de l'ordre de 15 à 90°, au niveau d'un point de croisement (21), de préférence au-dessus de rainures, d'encoches, de cavités, d'échancrures ou d'étranglements de stabilisation de position relative (21') pour la formation d'une liaison par enfichage, un noyau (3) en forme de plaque constitué de la pluralité de noyaux partiels (3'), maintenant celles-ci dans une position et une disposition stable entre elles, relié à celles-ci et les englobant ou les incorporant ou les entourant de tous côtés, en matière plastique alvéolaire robuste muni d'une armature, ces barres d'armature ou de renforcement (2) étant conçues globalement sous la forme de bandes, donc avec une section transversale en forme de I, très large ou plate avec des cavités longitudinales latérales ou des rainures sur les flancs (23),
les barres d'armature (2) se croisant entre elles étant orientées globalement parallèlement ou avec un angle de 90° par rapport aux bords latéraux (4) de la ou des plaque(s) de palette (1) ou dans la direction des diagonales de celle-ci et
les noyaux partiels (3') du noyau en matière plastique alvéolaire (3) constitué de ceux-ci, contenant les barres d'armature ou de renforcement (2) et englobant ou entourant celles-ci, comprennent, sur leurs flancs latéraux (22), au niveau desquels ils s'appuient contre les barres d'armature ou de renforcement (2), des saillies longitudinales présentant une section transversale adaptée à la section transversale de celles-ci, qui s'emboîtent par complémentarité de forme dans les cavités longitudinales latérales correspondantes mentionnées ci-dessus ou les rainures des flancs (23) des barres d'armature ou de renforcement et de préférence également par liaison de matière par expansion ou par collage et
**en ce que** tous les bords latéraux (4) de la plaque de base de palette (1) sont renforcés soit par des profilés (5) tirés, poussés et/ou collés dans la matière plastique composite ou tirés, poussés, emboutis et/ou collés au-dessus de celle-ci, en métal léger, en aluminium ou un alliage d'aluminium à haute résistance.

2. Palette de transport selon la revendication 1, **caractérisée en ce que** les barres d'armature ou de renforcement (2) en forme de bandes et les deux couches extérieures recouvrant le noyau en matière alvéolaire (3) par-dessus ou par-dessous ou la couche d'enveloppe (6) enveloppant de préférence entièrement le noyau en matière alvéolaire sont constituées de manière différente ou identique d'une matière plastique composite renforcée avec des fibres de verre, de carbone, d'aramide, et/ou des fibres minérales, plus particulièrement des fibres de basalte, tous les bords de la plaque de palette étant enveloppés avec la même matière plastique composite lorsque la plaque de noyau en matière alvéolaire est enveloppée d'une couche de matière plastique composite unique.

3. Palette de transport selon la revendication 1 ou 2, **caractérisée en ce que** le noyau en matière alvéolaire (3) intégrant les barres d'armature ou de renforcement (2) avec plusieurs de ses noyaux partiels (3'), est constitué d'une matière plastique alvéolaire robuste, plus particulièrement de « Rohacell » ou à base de polyuréthane.

4. Palette de transport selon l'une des revendications 1 à 3, **caractérisée en ce que** les bords latéraux (40) de la palette ou de la plaque de palette sont épaissis au niveau du côté supérieure ou surélevés vers le haut, à savoir
- grâce au fait que les épaississements des bords latéraux sont constitués avec la couche d'enveloppe (6) en matière plastique composite renforcée par des fibres et comprennent au moins une rainure de contre-dépouille (71), de préférence ouverte vers le haut, dans laquelle est tiré ou poussé un profilé (5) en métal léger, plus particulièrement en aluminium ou en alliage d'aluminium ou
- **en ce que** au-dessus ou sur les bords latéraux (40) de la plaque de palette (1) enveloppée de la matière plastique composite renforcée par des fibres est tiré ou poussé un profilé (5) épaississant ou renforçant les bords latéraux (40) en métal léger, plus particulièrement en aluminium ou en alliage d'aluminium, le côté inférieur (502) de ce profilé (5) étant en affleurement, avec sa couche de matière composite du côté inférieur, avec le côté inférieur de la palette.

5. Palette de transport selon l'une des revendications 1 à 4, **caractérisée en ce que** le noyau en matière alvéolaire (3) constitué des noyaux partiels (3') enveloppant les barres d'armature ou de renforcement (2) et enveloppé entièrement par la matière plastique composite à haute résistance renforcée par des fibres, donc la plaque de palette (1) comprend des saillies à complémentarité de forme (35) s'étendant de manière continue à une certaine distance (a) de tous les bords (4) et parallèlement à ceux-ci, orientées vers le haut, présentant de préférence une section trapézoïdale arrondie, qui interagissent avec des échancrures longitudinales (55), présentant une forme de section transversale trapézoïdale et orientées vers le bas, des profilés (5) renforçant les stabilisant les bords (4) du corps de base de la palette (1), tirés ou poussés sur les bords de la palette (4) ou emboutissant ceux-ci, en métal léger, plus particulièrement en aluminium ou en alliage d'aluminium à haute résistance, par complémentarité de forme et de préférence également par liaison de matière.

6. Palette de transport selon l'une des revendications 1 à 5, **caractérisée en ce que** les profilés en métal léger, plus particulièrement en aluminium (5), tirés ou poussés d'une seule pièce sur les bords de la plaque de base de la palette (4) raccordent l'enveloppe du bord de palette (6) constituée de la matière plastique à haute résistance, avec son prolongement inférieur (54) et son prolongement supérieur (52) relié avec celui-ci par l'intermédiaire de son arête de bord (37), au bord (4) du corps de base de palette (1), la surface inférieure (502) du prolongement inférieur (54) étant aligné avec le côté inférieur plat de la plaque de base de la palette (1), tandis que le prolongement supérieur (52) dépasse du côté supérieur, de préférence plat, du corps de base de la palette (1).

7. Palette de transport selon l'une des revendications 1 à 6, **caractérisée en ce que** le profilé en métal léger (5) renforçant la plaque de base de palette (1) comprend, au niveau de son côté supérieur (os) une rainure de contre-dépouille longitudinale (51) dans laquelle, à partir de son côté supérieur (51) sont réalisées des évidements (58), de préférence circulaires, dont l'extension (wd) transversalement par rapport à l'extension de la rainure (511), de préférence le diamètre (da) correspondant, est supérieur à la distance (bf) entre les deux prolongements de contre-dépouille supérieurs de la rainure (511).

8. Palette de transport selon l'une des revendications 1 à 7, **caractérisée en ce que**, pour le renforcement des zones angulaires de la plaque de base de la palette (1) sont prévus des corps de stabilisation d'angles (50) à base de matière plastique renforcée par des fibres ou d'aluminium, qui présentent, au niveau de leurs surfaces de raccordement de profilés (501, 502), disposées à angle droit entre elles, une forme de section transversale comprenant deux prolongements, intégrant les plaques de palettes entre les prolongements, identique aux profilés de renforcement des bords de la palette (5) reliés directement en métal léger, le cas échéant sans rainure de contre-dépouille (5) guidée au niveau des angles, moyennant quoi il est prévu de préférence que la zone angulaire proprement dite des corps de stabilisation des angles (50) est arrondie.

9. Procédé de fabrication d'une palette de transport (100) selon l'une des revendications 1 à 8, **caractérisé en ce que**
- les barres d'armature ou de renforcement (2), en matière plastique composite renforcée par des fibres, qui se croisent, sont amenées dans la position souhaitée entre elles par l'intermédiaire de leurs liaisons par enfichage,
- dans les champs ou les goussets entre elles, sont insérés des noyaux partiels (3') présentant des formes correspondantes, constitués d'une matière plastique alvéolaire ferme, qui s'appuient contre les barres d'armature ou de renforcement et sont de préférence finalement collés ou autres avec les barres d'armature ou de renforcement (2) et forment dans l'ensemble le noyau de matière plastique alvéolaire armé (3),
- sur ce noyau en matière plastique alvéolaire, pour la liaison, un préimprégné de matière plastique est appliqué,
- au moins des deux côtés du noyau de matière plastique alvéolaire, est appliquée une toison d'armature par des fibres, qui, après la poussée des profilés en métal léger (5) sur les bords latéraux du noyau en matière plastique alvéolaire est imprégné avec un polymère pour al formation de plaque de palette (1) et la structure ainsi préparée est comprimée avec les profilés de métal léger en formant la palette finie sous l'action de la chaleur et de la pression.
